# EUROPEAN PATENT APPLICATION

(11) **EP 4 723 298 A1**
(43) Date of publication of application: **08.04.2026**
(21) Application number: 25189978.7
(22) Date of filing: 16.07.2025
(51) Int. Cl.: H01M 10/613, H01M 10/647, H01M 10/6554, H01M 10/6556, H01M 10/658, H01M 50/209, H01M 50/30, H01M 50/342, H01M 50/358, H01M 50/507

(54) **BATTERY MODULE AND BATTERY PACK INCLUDING THE BATTERY MODULE**

(30) Priority: 02.10.2024 KR 20240134295
(71) Applicant: SAMSUNG SDI CO., LTD., Yongin-si, Gyeonggi-do 17084 (KR)
(72) Inventor: IM, Jang Yeong, 16678 Suwon-si (KR); PARK, Jong Taek, 16678 Suwon-si (KR); LEE, Sang Ik, 16678 Suwon-si (KR); KIM, Cheorl Hwan, 16678 Suwon-si (KR); KIM, Jin, 16678 Suwon-si (KR); PARK, Jee Yong, 16678 Suwon-si (KR)
(74) Representative: Marks & Clerk LLP

(57) **Abstract**

A battery module includes a plurality of battery cells, with each of the battery cells including battery cell terminals and a battery cell vent. The battery module also includes a reinforcement frame including a plurality of reinforcement frame connection vents in fluid communication with the battery cell vents and a reinforcement frame discharge vent in fluid communication with the reinforcement frame connection vents. A busbar module electrically connects the battery cell terminals.

## Description

### BACKGROUND

### 1. Field of the Disclosure

The present disclosure relates to a battery module and a battery pack including the battery module.

### 2. Discussion of Related Art

Secondary batteries are batteries that can be charged and discharged, unlike primary batteries that cannot be charged. Low-capacity secondary batteries are used in small portable electronic devices such as smartphones, feature phones, notebook computers, digital cameras, and camcorders. Largecapacity secondary batteries are widely used as power sources for driving motors and for power storage in hybrid vehicles, electric vehicles, and the like. A secondary battery includes an electrode assembly including a positive electrode and a negative electrode, a case for accommodating the electrode assembly, a stack terminal connected to the electrode assembly, and the like.

As batteries are used while being charged and discharged, heat and gas are generated in the batteries, which may be a safety problem of the batteries. Various components for preventing thermal runaway and explosions of batteries are being used to improve the safety of batteries. For example, a vent, through which gas in a battery is discharged, a heat blocking member, and the like are being used. While various methods are being used to secure the safety of batteries, various types of battery packs require further improved safety.

The information disclosed in this background section is provided for enhancement of understanding of the background of the present disclosure, and it may therefore contain information that does not constitute related (or prior) art.

### SUMMARY OF THE DISCLOSURE

The present disclosure is directed to providing a battery module with improved stability and a battery pack including the battery module.

In addition, the present disclosure is directed to providing a battery module in which thermal runaway is prevented and a battery pack including the battery module.

These and other aspects and features of the present disclosure will be described in or will be apparent from the following description of some embodiments of the present disclosure.

In accordance with one aspect of the present disclosure, there is a provided a battery module including a plurality of battery cells, each of the battery cells including battery cell terminals and a battery cell vent, a reinforcement frame including a plurality of reinforcement frame connection vents in fluid communication with the battery cell vents and a reinforcement frame discharge vent in fluid communication with the reinforcement frame connection vents, and a busbar module that electrically connects the battery cell terminals.

The battery module may further include an end plate disposed to face a battery cell disposed at an end portion of the plurality of battery cells.

The battery module may further include a lower cooling plate which is disposed under the battery cells and is configured to cool the battery cells.

The lower cooling plate may include a lower cooling plate body and a lower cooling plate vent that passes through the lower cooling plate body and is in fluid communication with the reinforcement frame discharge vent.

The battery module may further include an upper cooling plate that is disposed on the battery cells and is configured to cool the battery cells.

The battery module may further include insulation members that are disposed between adjacent battery cells, the insulation members insulating the battery cells from each other.

The reinforcement frame may be disposed between battery cells that face each other.

The battery module may further include an insulating sheet that is disposed between the battery cells and the reinforcement frame, the insulating sheet blocking the battery cell vents from the reinforcement frame connection vent, and the insulating sheet being configured to be ruptured at a set temperature and/or pressure to allow the battery cell vents to be in communication with the reinforcement frame connection vents.

The insulating sheet may include insulating sheet vents disposed at locations corresponding to the battery cell vents and the reinforcement frame connection vents.

Each of the reinforcement frame connection vents may be in fluid communication with a plurality of battery cell vents.

The battery module may further include insulating sheet notches formed as concave grooves in the insulating sheet to form the insulating sheet vents.

The battery cell vents may be disposed at first side portions of the battery cells, and the battery cell terminals may be disposed at second side portions of the battery cells.

The battery cell vents may be disposed at side portions of the battery cells, and the battery cell terminals may be disposed on other parts of the battery cells.

The reinforcement frame may include a reinforcement frame body and a vertical reinforcement frame partition wall disposed inside the reinforcement frame body and connected to an upper portion and a lower portion of the reinforcement frame body.

In accordance with another aspect of the present disclosure, there is a provided a battery pack including a pack case in which a space is formed and which includes pack vents through which an inside and an outside of the pack case are in fluid communication with each other and a battery module disposed in the pack case, wherein the battery module includes a plurality of battery cells, each of the battery cells including battery cell terminals and battery cell vents, a reinforcement frame including a plurality of reinforcement frame connection vents in fluid communication with the battery cell vents and a reinforcement frame discharge vent in fluid communication with the reinforcement frame connection vents, and a busbar module that electrically connects the battery cell terminals.

The pack vents may be disposed at locations corresponding to the reinforcement frame discharge vents and may be in fluid communication with the reinforcement frame discharge vent.

The battery module may further include an end plate disposed to face a battery cell of the battery cells disposed at an end portion of the plurality of battery cells.

The battery module may further include a lower cooling plate that is disposed under the battery cells and configured to cool the battery cells.

The battery module may further include an upper cooling pate that is disposed on the battery cells and is configured to cool the battery cells.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the embodiments depicted in the drawings.
FIG. 1 is an exploded perspective view illustrating a battery pack from a first viewpoint according to an embodiment of the present disclosure;
FIG. 2 is an exploded perspective view illustrating the battery pack from a second viewpoint according to an embodiment of the present disclosure;
FIG. 3 is a perspective view illustrating a battery module according to an embodiment of the present disclosure;
FIG. 4 is an exploded perspective view illustrating the battery module according to an embodiment of the present disclosure;
FIG. 5 is a schematic plan view illustrating the battery module, in which a fire occurs, according to an embodiment of the present disclosure;
FIG. 6 is a schematic cross-sectional view illustrating the battery module, in which a fire occurs, according to an embodiment of the present disclosure;
FIG. 7 is a perspective view illustrating a battery cell from a first viewpoint according to an embodiment of the present disclosure;
FIG. 8 is a perspective view illustrating the battery cell from a second viewpoint according to an embodiment of the present disclosure;
FIG. 9 is a schematic perspective view illustrating a first example of a reinforcement frame and an insulating sheet according to the present disclosure;
FIG. 10 is a schematic perspective view illustrating the first example of the reinforcement frame according to the present disclosure;
FIG. 11 is a schematic exploded perspective view illustrating a second example of the reinforcement frame and the insulating sheet according to the present disclosure;
FIG. 12 is a cross-sectional view illustrating the first example of the reinforcement frame according to the present disclosure;
FIG. 13 is a cross-sectional view illustrating the second example of the reinforcement frame according to the present disclosure;
FIG. 14 is a cross-sectional view illustrating a third example of the reinforcement frame according to the present disclosure;
FIG. 15 is a cross-sectional view illustrating a fourth example of the reinforcement frame according to the present disclosure;
FIG. 16 is a cross-sectional view illustrating a fifth example of the reinforcement frame according to the present disclosure;
FIG. 17 is a plan view illustrating the first example of the insulating sheet according to the present disclosure;
FIG. 18 is a plan view illustrating the second example of the insulating sheet according to the present disclosure;
FIG. 19 is a plan view illustrating a third example of the insulating sheet according to the present disclosure;
FIG. 20 is a plan view illustrating a fourth example of the insulating sheet according to the present disclosure;
FIG. 21 is a schematic plan view illustrating a battery module, in which a fire occurs, according to another embodiment of the present disclosure;
FIG. 22 is a perspective view illustrating the battery module according to another embodiment of the present disclosure;
FIG. 23 is a perspective view illustrating battery cells disposed according to a second embodiment of the present disclosure;
FIG. 24 is a perspective view illustrating battery cells disposed according to a third embodiment of the present disclosure;
FIG. 25 is a perspective view illustrating battery cells disposed according to a fourth embodiment of the present disclosure;
FIG. 26 is a perspective view illustrating battery cells disposed according to a fifth embodiment of the present disclosure; and
FIG. 27 is an exploded perspective view illustrating a battery pack according to another embodiment of the present disclosure.

### DETAILED DESCRIPTION OF EMBODIMENTS

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure. Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same." Thus, the phrase "substantially the same" may include a case having a deviation that is considered low in the art, for example, a deviation of 5% or less. **In** addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

**In** addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. **In** addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

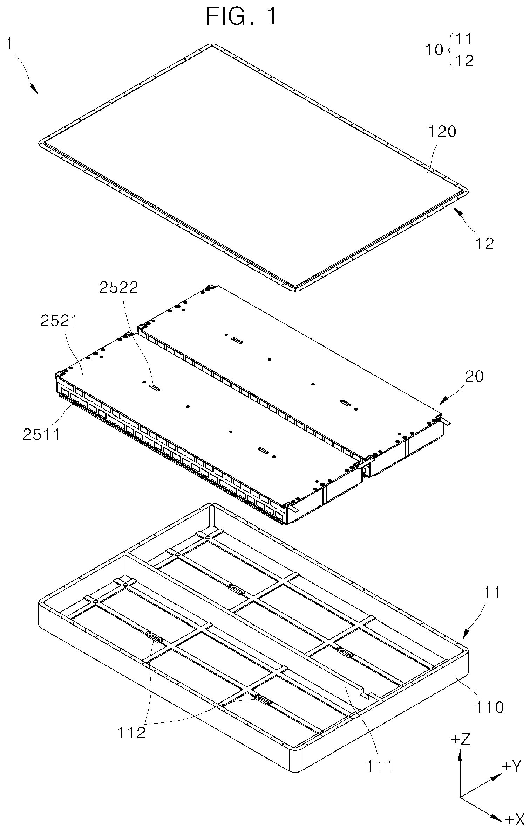

FIG. 1 is a schematic perspective view illustrating a configuration of a battery pack according to one embodiment of the present disclosure.

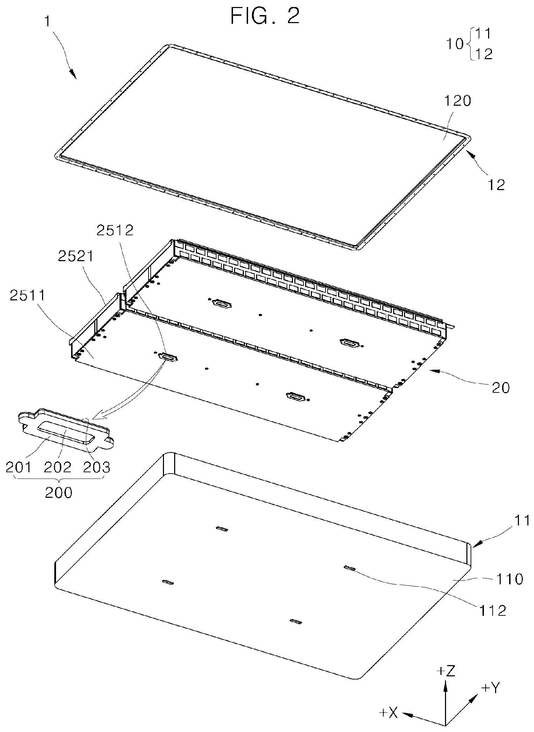

FIG. 1 is an exploded perspective view illustrating the battery pack from a first viewpoint, and FIG. 2 is an exploded perspective view illustrating the battery pack from a second viewpoint.

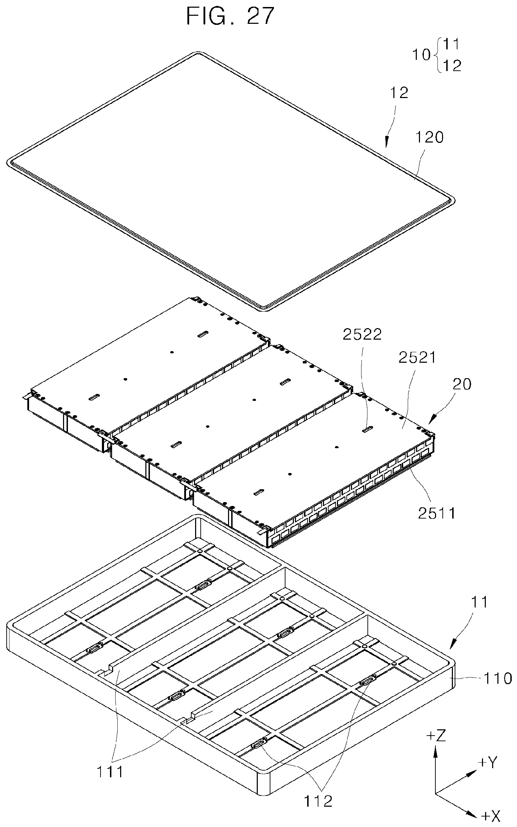

Referring to FIGS. 1, 2 and 27, a battery pack 1 may include a pack case 10 and a battery module 20. Hereinafter, the battery pack 1 and the battery module 20 will be schematically described.

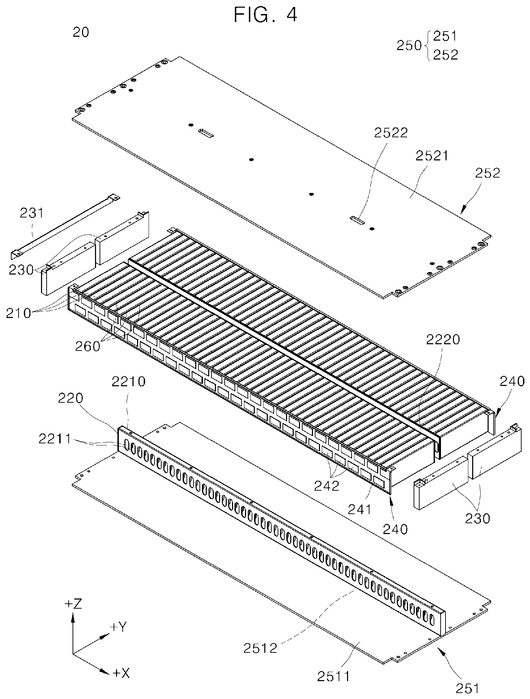

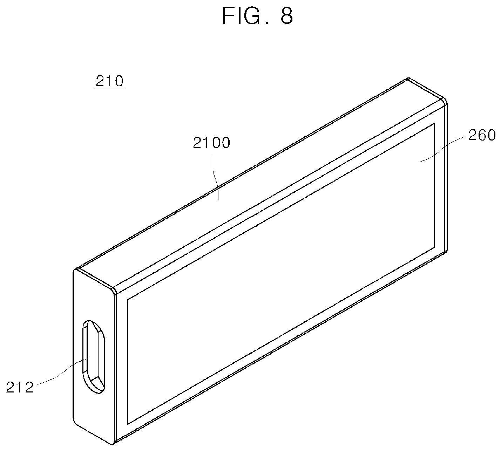

A plurality of battery modules 20 may be disposed in the pack case 10, and each of the battery modules 20 may include a plurality of battery cells for example, battery cells 210 of FIG. 4. The battery cells 210 may be arrayed in one direction (for example, in an X-axis direction). The battery module 20 may include a reinforcement frame (for example, a reinforcement frame 220 of FIG. 4) extending in the direction in which the battery cells 210 are arrayed (for example, in the X-axis direction). The reinforcement frame 220 may be in fluid communication with a battery cell vent 212 (see FIG. 8) formed in the battery cell 210. A flame and/or gas G discharged from the battery cell vent 212 may move to the reinforcement frame 220, and the flame and/or gas G may be discharged from the reinforcement frame 220 to outside of the battery pack 1 through a pack vent 112 formed in the pack case 10. As the reinforcement frame 220 is disposed in the battery module 20, the reinforcement frame 220 can improve the strength of the battery module 20, and the flame and/or gas G generated in the battery module 20 may be discharged to outside of the battery module 20.

The strength of the battery module 20 and the battery pack 1 can be improved due to the reinforcement frame 220. In addition, in the battery module 20 and the battery pack 1, as the flame and/or gas G is discharged to outside of the battery pack 1 through the reinforcement frame 220, thermal runaway can be prevented. Accordingly, the safety of the battery module 20 and the battery pack 1 are improved.

Hereinafter, a detailed configuration of the battery pack 1 will be described.

The pack case 10 may include a lower pack case 11 and an upper pack case 12. One side (for example, in a +Z-axis direction) of the lower pack case 11 may be open, and the upper pack case 12 may be disposed to cover an open portion of the lower pack case 11. As the lower pack case 11 and the upper pack case 12 are coupled, a space may be formed in the pack case 10, and the battery module 20 may be disposed in the space formed in the pack case 10.

The lower pack case 11 may include a lower pack case body 110. One side (for example, in a +Z-axis direction) of the lower pack case body 110 may be open. In FIGS. 1 and 2, it is illustrated that one side of the lower pack case 11 is open, but the present disclosure includes an embodiment in which one side (for example, in a -Z-axis direction) of an upper pack case 12 is open.

The pack case 10 may include a pack partition wall 111 and pack vents 112. The pack partition wall 111 and the pack vent 112 may be disposed in the lower pack case body 110.

The pack partition wall 111 may be disposed in the pack case 10 to divide the plurality of battery modules 20. According to an embodiment, as the battery modules 20 are disposed at both sides (for example, in a Y-axis direction) of the pack partition wall 111, heat transfer between the battery modules 20 may be prevented by the pack partition wall 111. In addition, as the pack partition wall 111 is disposed in the pack case 10, the strength of the pack case 10 can be improved.

The plurality of battery modules 20 may be arrayed parallel to one direction (for example, in the Y-axis direction). The pack partition wall 111 may be disposed between the battery modules 20 that are adjacent to the pack partition wall 111.

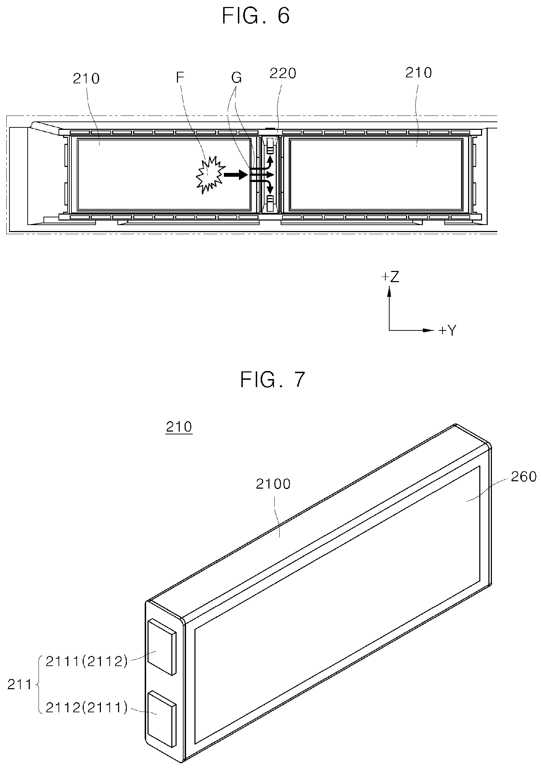

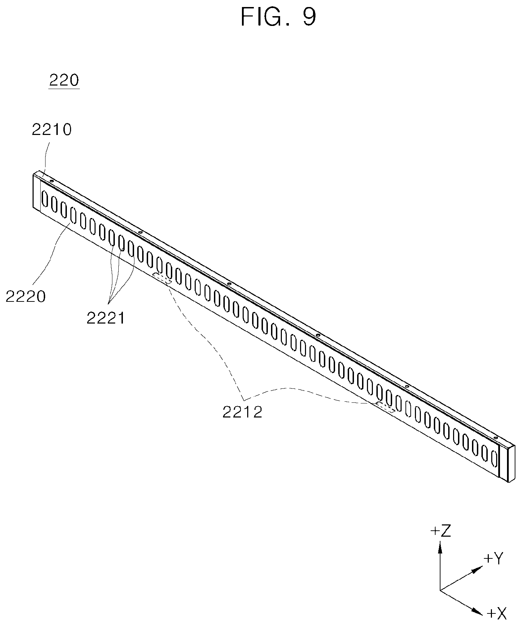

Each of the pack vents 112 may be provided as a hole passing through one surface (for example, in a -Z-axis direction) of the lower pack case body 110. The pack vents 112 may communicate with a reinforcement frame discharge vent discharge vent 2212 (see FIG. 9) of the battery module 20 and allow the flame and/or gas G ((see FIG. 6) discharged from the battery module 20 to be discharged to outside of the battery pack 1.

The upper pack case 12 may be disposed to cover an opening of the lower pack case 11. The upper pack case 12 may be coupled to the lower pack case 11 to form the space in the pack case 10. The upper pack case 12 may include an upper pack case body 120, and the upper pack case body 120 may be disposed on the lower pack case body 110 (for example, in the +Z-axis direction).

The upper pack case 12 may include a hole passing through the upper pack case body 120, and the hole passing through the upper pack case body 120 may be in fluid communication with the reinforcement frame discharge vent 2212 and allow the flame and/or gas G generated in the battery module 20 to be discharged to outside of the battery pack 1.

A battery module vent 200 may be disposed in a lower portion of the battery module 20. According to one embodiment, the battery module vent 200 may be disposed at a location corresponding to the reinforcement frame discharge vent 2212 and/or the pack vent 112. The battery module vent 200 may include a battery module vent fixing member 201, a battery module vent filter 202, and a battery module vent gasket 203. The battery module vent filter 202 may block the pack vent 112 and the reinforcement frame discharge vent 2212. Accordingly, moisture, gas, and the like can be prevented from being introduced into the battery module 20 from outside of the battery pack 1.

The battery module vent fixing member 201 may be disposed on an edge of the battery module vent filter 202 and may fix the battery module vent filter 202.

The battery module vent gasket 203 may be disposed at one side (for example, in a +Z-axis direction) of the battery module vent fixing member 201 and fix the battery module vent 200 to the battery module 20 and/or the pack case 10. The battery module vent gasket 203 may be disposed in the battery module 20 and/or the pack case 10 and may serve as a sealing material. The battery module vent gasket 203 may be provided as a gasket or adhesive.

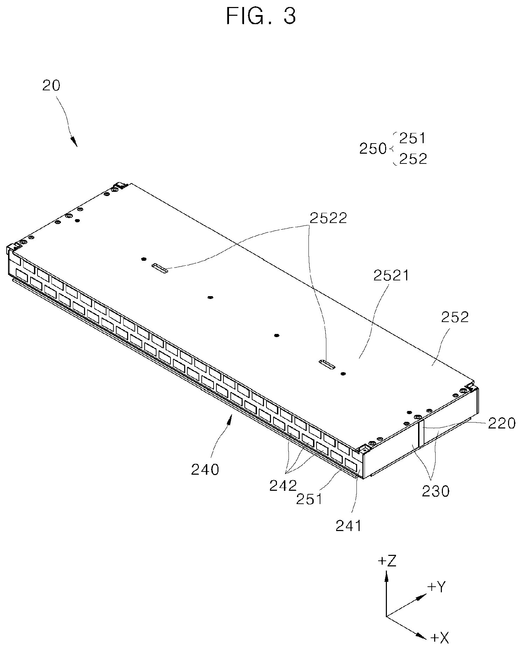

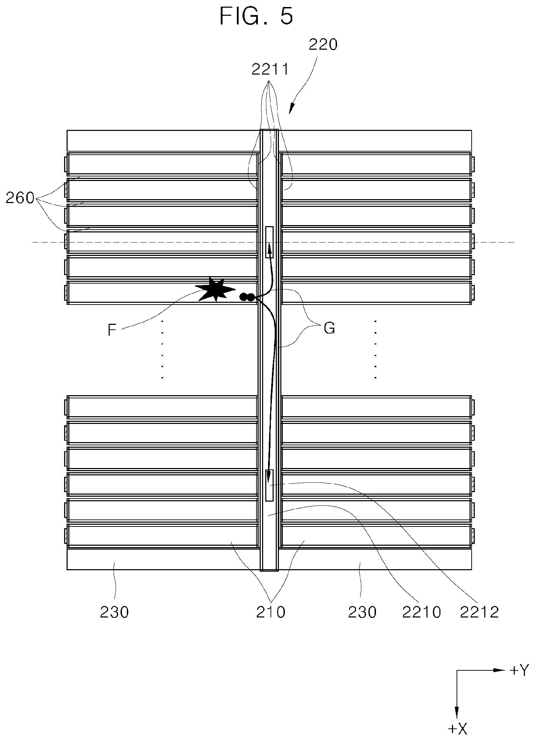

FIG. 3 is a perspective view illustrating a battery module according to an embodiment of the present disclosure, and FIG. 4 is an exploded perspective view illustrating the battery module according to an embodiment of the present disclosure. FIG. 5 is a schematic plan view illustrating the battery module, in which a fire occurs, according to an embodiment of the present disclosure, and FIG. 6 is a schematic cross-sectional view illustrating the battery module, in which the fire occurs, according to an embodiment of the present disclosure.

The battery module 20 illustrated in FIGS. 3 to 6 is similar to the battery module 20 illustrated in FIGS. 1 and 2. Accordingly, descriptions of the same components will be omitted.

Referring to FIGS. 3 to 6, the battery module 20 may include battery cells 210, a reinforcement frame 220, an end plate 230, a busbar module 240, a cooling plate part 250, and an insulation member 260.

A detailed configuration of the battery cells 210 will be described below with reference to FIGS. 7 and 8.

The battery cells 210 may be arrayed in one direction (for example, in an X-axis direction). A plurality of battery cells 210 may be arrayed in parallel, and battery cell terminals 211 disposed on the plurality of battery cells 210 may be electrically connected by busbar modules 240. As the plurality of battery cells 210 are electrically connected through the busbar modules 240, a capacity or voltage of the battery module 20 can increase.

The battery cells 210 may face each other. According to an embodiment, two battery cells 210 may be disposed to face each other with the reinforcement frame 220 interposed therebetween. According to an embodiment, a battery cell vent 212 disposed in the battery cell 210 may be disposed at a location corresponding to a reinforcement frame connection vent 2211 disposed in the reinforcement frame 220. Accordingly, a flame and/or gas G discharged through the battery cell vent 212 may move into the reinforcement frame 220 through the reinforcement frame connection vent 2211.

The reinforcement frame 220 may extend in the direction that the battery cells 210 are arrayed (for example, in the X-axis direction). The reinforcement frame 220 may be disposed between the battery cells 210 that face the reinforcement frame 220, and the reinforcement frame connection vents 2211 may be disposed at locations corresponding to the battery cell vents 212 of the battery cells 21.

The reinforcement frame 220 may include a reinforcement frame body 2210, the reinforcement frame connection vents 2211, and a reinforcement frame discharge vents 2212.

As the reinforcement frame 220 is disposed in the battery module 20, the strength of the battery module 20 can be improved. Thus, the battery module 20 cannot be damaged by an external impact.

The reinforcement frame body 2210 may be provided in a pipe shape in which a space is formed. According to an embodiment, the reinforcement frame body 2210 may be formed in the pipe shape of which a cross section has a substantially rectangular shape.

The reinforcement frame connection vents 2211 and the reinforcement frame discharge vents 2212 may be disposed in the reinforcement frame body 2210.

The reinforcement frame connection vents 2211 may be disposed in each of both surfaces (for example, in a Y-axis direction) of the reinforcement frame body 2210. The reinforcement frame connection vent 2211 may be provided as a plurality of reinforcement frame connection vents 2211. As the reinforcement frame connection vents 2211 are disposed in the reinforcement frame body 2210, and the battery cell vents 212 of the battery cells 210 may be disposed to face the reinforcement frame connection vents 2211, the flame and/or gas G discharged from inside to outside of the battery cell 210 may move into the reinforcement frame 220 through the battery cell vent 212 and the reinforcement frame connection vent 2211.

The reinforcement frame discharge vents 2212 may be disposed in one surface (for example, in a Z-axis direction) of the reinforcement frame body 2210. The reinforcement frame discharge vents 2212 may be disposed on an upper surface (for example, in a +Z-axis direction) and/or a lower surface (for example, in a -Z-axis direction) of the reinforcement frame body 2210. The reinforcement frame discharge vents 2212 may be disposed to face a lower cooling plate vent 2512 and/or an upper cooling plate vent 2522 disposed in the cooling plate part 250 of the battery module 20. Accordingly, the flame and/or gas G in the reinforcement frame 220 may be discharged to outside of the battery pack 1 through the reinforcement frame discharge vents 2212.

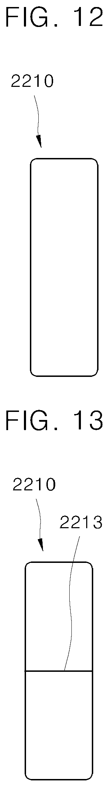

The reinforcement frame 220 may further include a horizontal reinforcement frame partition wall 2213 and a vertical reinforcement frame partition wall 2214. The horizontal reinforcement frame partition wall 2213 and the vertical reinforcement frame partition wall 2214 will be described below with reference to FIGS. 12 to 16.

The end plate 230 may be disposed on an outer side of the battery module 20. The end plate 230 may be provided as a plurality of end plates 230. According to one embodiment, the end plates 230 may be disposed to be adjacent to the battery cells 210 disposed at end portions of the plurality of battery cells 210. The end plates 230 may be disposed at an end portion of one side (for example, in a -X-axis direction) and/or an end portion of the other side (for example, a +X-axis direction) of the plurality of battery cells 210. A circuit board and the like for detecting a state of the battery module 20 may be disposed on the end plate 230.

An end plate holder 231 may connect the plurality of end plates 230 and/or the plurality of busbar modules 240. According to an embodiment, the end plate holder 231 may connect a plurality of end plates 230 and/or a plurality of busbar modules 240 and fix locations thereof and electrically connect the busbar modules 240.

The busbar module 240 may be disposed on one side (for example, in a -Y-axis direction) or the other side (for example, in a +Y-axis direction) of the battery module 20. According to an embodiment, the busbar module 240 may be disposed on one side (for example, in a -Y-axis direction) or the other side (for example, in a +Y-axis direction) of the battery cells 210. The busbar module 240 may electrically connect the battery cells 210.

The busbar module 240 may include a busbar plate 241 and a busbar body 242. The busbar plate 241 may be disposed on a surface (for example, in the +Y-axis direction or the -Y-axis direction) on which the battery cell terminal 211 of the battery cell 210 is disposed. The busbar plate 241 may be disposed on one side (for example, in the +Y-axis direction) of the battery cell 210 disposed on one side (for example, in a +Y-axis direction) with respect to the reinforcement frame 220, and the busbar plate 241 may be disposed on the other side (for example, in the -Y-axis direction) of the battery cell 210 disposed on the other side (for example, in a -Y-axis direction) with respect to the reinforcement frame 220.

The busbar body 242 may be disposed on the busbar plate 241, and the busbar body 242 may electrically connect the battery cell terminals 211. As the busbar body 242 electrically connects the battery cell terminals 211, a capacity or voltage of the battery module 20 can increase.

The cooling plate part 250 may be disposed adjacent to the battery cells 210 and may cool the battery cells 210. A coolant may be disposed in the cooling plate part 250, the cool coolant may be introduced into the cooling plate part 250 to cool the battery cells 210. Coolant that has cooled the battery cells 210 may be recooled by a heat exchanger (not shown) and the may be used to cool the battery cells 210 again.

The cooling plate part 250 may include a lower cooling plate 251 and/or an upper cooling plate 252. The lower cooling plate 251 may be disposed under the battery cells 210 (for example, in a -Z-axis direction from), and the upper cooling plate 252 may be disposed on the battery cell 210 (for example, in a +Z-axis direction from).

The lower cooling plate 251 may include a lower cooling plate body 2511 and a lower cooling plate vent 2512. The lower cooling plate vent 2512 may be provided as a hole passing through the lower cooling plate body 2511. The lower cooling plate vent 2512 may be disposed at a location corresponding to the reinforcement frame discharge vent 2212 in the reinforcement frame 220. Accordingly, the flame and/or gas G in the reinforcement frame 220 may be discharged to outside of the battery module 20 through the reinforcement frame discharge vent 2212 and the lower cooling plate vent 2512.

The upper cooling plate 252 may include an upper cooling plate body 2521 and an upper cooling plate vent 2522. The upper cooling plate vent 2522 may be provided as a hole passing through the upper cooling plate body 2521. The upper cooling plate vent 2522 may be disposed at a location corresponding to the reinforcement frame discharge vent 2212 disposed in the reinforcement frame 220. Accordingly, the flame and/or gas G in the reinforcement frame 220 may be discharged to outside of the battery module 20 through the reinforcement frame discharge vent 2212 and the upper cooling plate vent 2522.

An insulation member 260 may be disposed on a side surface (for example, in the X-axis direction) of the battery cell 210. According to one embodiment, insulation members 260 may be disposed between the battery cells 210. As the insulation members 260 are disposed between the plurality of battery cells 210, heat transfer from one battery cell 210 to an adjacent battery cell 210 may be prevented. The insulation member 260 may include a material with high heat insulation performance. According to an embodiment, the insulation member 260 may include various materials such as mica, aerogel, and the like.

Referring to FIGS. 5 and 6, it can be seen that the flame and/or gas G is discharged to outside of the battery cell 210 when a fire F occurs in one of the battery cells 210. When the fire F occurs in one battery cell 210 among the plurality of battery cells 210, the flame and/or gas G in the battery cell 210 may be discharged through the battery cell vent 212 and move to the reinforcement frame connection vent 2211 of the reinforcement frame 220. The flame and/or gas G introduced into the reinforcement frame body 2210 through the reinforcement frame connection vent 2211 may in the direction (for example, in the X-axis direction) that the reinforcement frame body 2210 extends.

The flame and/or gas G may move in the direction that the reinforcement frame body 2210 extends and move to the reinforcement frame discharge vent 2212 disposed in the reinforcement frame 220. The flame and/or gas G may be discharged to the lower cooling plate vent 2512 and/or the upper cooling plate vent 2522 through the reinforcement frame discharge vent 2212. The flame and/or gas G discharged to the lower cooling plate vent 2512 and/or the upper cooling plate vent 2522 may be discharged to outside of the pack case 10 through the battery module vent 200 and the pack vent 112.

In FIGS. 1 and 2, the pack vent 112 is only disposed in the lower pack case 11. But the present disclosure also includes embodiments in which a pack vent 112 is disposed in the upper pack case 12.

As described above, the reinforcement frame 220 can improve a strength of the battery pack 1 and the battery module 20 to reduce a possibility that the battery pack 1 and the battery module 20 are damaged. And the reinforcement frame 220 may serve as a passage through which the flame and/or gas G generated due to a fire F occurring in a battery cell 210 is discharged to outside of the battery pack 1 and the battery module 20.

FIG. 7 is a perspective view illustrating a battery cell from a first viewpoint according to an embodiment of the present disclosure, and FIG. 8 is a perspective view illustrating the battery cell from a second viewpoint according to the embodiment of the present disclosure.

The battery cell 210 illustrated in FIGS. 7 and 8 is similar to the battery cell 210 illustrated in FIGS. 1 to 6. Accordingly, descriptions of the same components will be omitted.

The battery cell 210 may include a battery cell case 2100, a battery cell terminal 211, and a battery cell vent 212.

Referring to FIGS. 7 and 8, the battery cell 210 may include the battery cell case 2100 in which at least one electrode assembly is embedded. The electrode assembly may be formed by winding a positive electrode and a negative electrode with a separator, which is an insulator, interposed between the positive and negative electrodes.

Hereinafter, an example of the battery cell 210 that is lithium-ion secondary battery with a prismatic shape will be described. However, the present disclosure is not limited to such a battery, and the battery cell 210 may be a lithium polymer battery or cylindrical battery.

The electrode assembly may have a roll form in which the positive electrode and the negative electrode are wound with the separator, which is the insulator, interposed between the electrodes. However, the present disclosure is not limited to such a configuration. For example, an electrode assembly may be formed in a form in which a positive electrode and a negative electrode, which are formed as a plurality of sheets, are alternately stacked with a separator interposed therebetween.

Each of the positive electrode and the negative electrode may include a coated portion that is a region on which a current collector formed of a metal foil is coated with an active material and an uncoated portion that is a region on which a current collector is not coated with an active material.

The battery cell case 2100 may form an exterior of the battery cell 210 and provide a space in which the electrode assembly is accommodated. The battery cell case 2100 according to the present embodiment may have a rectangular hexahedron shape with a hollow inner space and an open side. The battery cell case 2100 may be formed of a conductive metal such as aluminium, an aluminium alloy, or steel plated with nickel.

The insulation member 260 may be disposed outside the battery cell case 2100. The insulation member 260 may be disposed outside the battery cell case 2100 such that adjacent battery cells 210 are not in contact with each other and are spaced apart from each other. According to an embodiment, the insulation member 260 may be attached to the battery cell case 2100. The insulation member 260 may include an insulating material such as rubber, a resin, or the like.

The battery cell terminal 211 may protrude outward from the battery cell case 2100. The battery cell terminal 211 may include a battery cell positive terminal 2111 and a battery cell negative terminal 2112. The battery cell positive terminal 2111 and the battery cell negative terminal 2112 may be threaded.

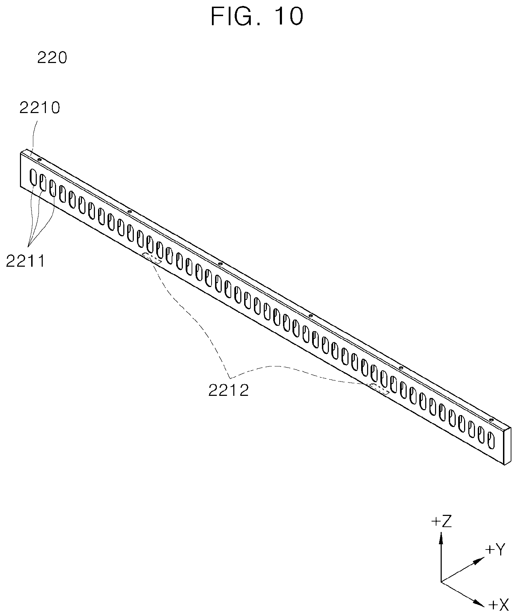

The battery cell vent 212, which opens when an internal pressure of the battery cell case 2100 is increased, may be formed in the battery cell case 2100. The battery cell vent 212 may be connected to a reinforcement frame connection vent 2211 as illustrated in FIGS. 9 and 10.

The battery cell vent 212 may be disposed to face the reinforcement frame connection vent 2211. When the battery cell vent 212 is opened, the battery cell vent 212 is in fluid communication with the reinforcement frame connection vent 2211. As the battery cell vent 212 is in fluid communication with the reinforcement frame connection vent 2211, when a fire F occurs in the battery cell 210, a flame and/or gas G may rupture the battery cell vent 212 and may be discharged through the battery cell vent 212. The flame and/or gas G discharged through the battery cell vent 212 may move along the reinforcement frame connection vent 2211 connected to the battery cell vent 212. And the flame and/or gas G may move along the reinforcement frame connection vent 2211 to outside of the battery module 20.

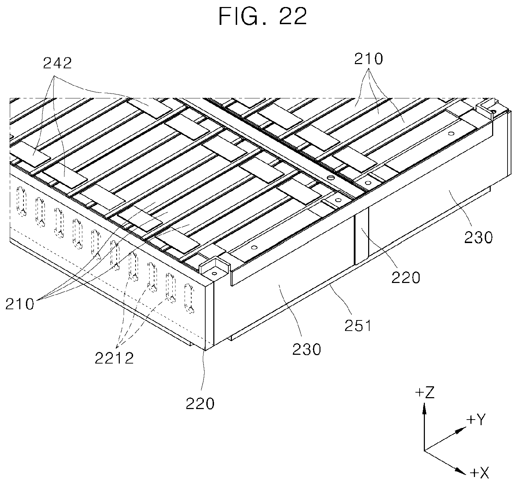

Another example of the battery cell 210 will be described below with reference to FIGS. 22 to 26.

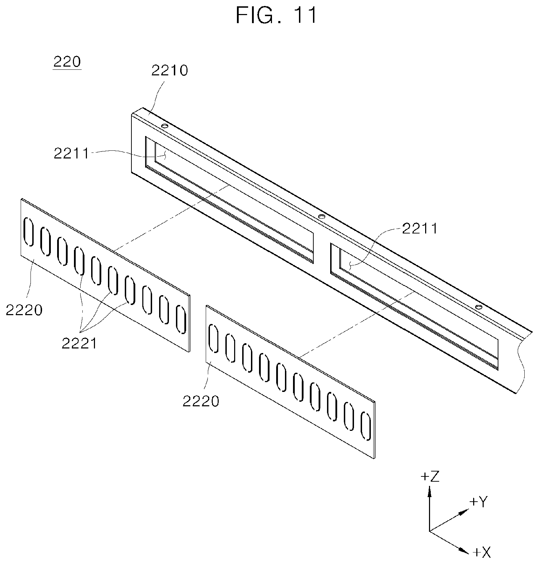

FIG. 9 is a schematic perspective view illustrating an example of a reinforcement frame and an insulating sheet according to the present disclosure, FIG. 10 is a schematic perspective view illustrating the example of the reinforcement frame according to the present disclosure, and FIG. 11 is a schematic exploded perspective view illustrating a second example of the reinforcement frame and the insulating sheet according to the present disclosure.

A reinforcement frame 220 illustrated in FIGS. 9 to 11 is similar to the reinforcement frame 220 illustrated in FIGS. 1 to 8. Accordingly, descriptions of the same components may be omitted.

The reinforcement frame 220 may include a reinforcement frame body 2210 and an insulating sheet 2220.

The reinforcement frame body 2210 may extend in one direction (for example, in an X-axis direction). The reinforcement frame body 2210 may be formed in a pipe shape inside which a space is formed. A cross section of the reinforcement frame body 2210 may be provided in a substantially quadrangular shape.

A reinforcement frame connection vent 2211 and a reinforcement frame discharge vent 2212 may be disposed in the reinforcement frame body 2210. The reinforcement frame connection vent 2211 may be provided as a hole which is disposed in a side surface (for example, in a Y-axis direction) of the reinforcement frame body 2210 and passes through the reinforcement frame body 2210. The reinforcement frame connection vent 2211 may be provided as a plurality of reinforcement frame connection vents 2211. The reinforcement frame connection vents 2211 may be disposed to face battery cell vents 212 of battery cells 210. When a fire F occurs in the battery cell 210, a flame and/or gas G may be discharged through the battery cell vent 212 and move to the reinforcement frame connection vent 2211. Thus, the plurality of reinforcement frame connection vents 2211 may be disposed to face the battery cell vents 212 disposed in the plurality of battery cells 210.

The reinforcement frame discharge vent 2212 may be provided as a hole that is disposed in an upper surface (for example, in a +Z-axis direction) and/or a lower surface (for example, in a -Z-axis direction) of the reinforcement frame body 2210, with the hole passing through the reinforcement frame body 2210. The reinforcement frame discharge vent 2212 may be provided as a plurality of reinforcement frame discharge vents 2212. The flame and/or gas G in the reinforcement frame 220 may be discharged to outside of the reinforcement frame 220 through the reinforcement frame discharge vents 2212.

In FIGS. 9 to 11, it is illustrated that the reinforcement frame discharge vent 2212 is disposed in a lower surface (for example, in a -Z-axis direction) of the reinforcement frame 220, But the present disclosure includes embodiments in which a reinforcement frame discharge vent 2212 is disposed in an upper surface (for example, in a +Z-axis direction) of a reinforcement frame 220.

The reinforcement frame discharge vent 2212 may be disposed to face a lower cooling plate vent 2512 and/or an upper cooling plate vent 2522 of a cooling plate part 250. The flame and/or gas G discharged to outside of the reinforcement frame 220 may be discharged to outside of a battery module 20 through the lower cooling plate vent 2512 and/or the upper cooling plate vent 2522.

As a pack vent 112 is disposed to face the lower cooling plate vent 2512 and/or the upper cooling plate vent 2522, the flame and/or gas G may be discharged to outside of a battery pack 1 through the pack vent 112.

The insulating sheet 2220 may be disposed on the reinforcement frame body 2210. According to an embodiment, the insulating sheet 2220 may be disposed on the side surface (for example, in the Y-axis direction) of the reinforcement frame body 2210. The insulating sheet 2220 may include a material with high insulation performance. According to an embodiment, the material of the insulating sheet 2220 may include various materials such as mica and aerogel.

An insulating sheet vent 2221 may be disposed in the insulating sheet 2220. For example, the insulating sheet vent 2221 may be disposed in the insulating sheet 2220 and ruptured by heat or a pressure. The insulating sheet vent 2221 may be provided as a plurality of insulating sheet vents 2221. According to embodiments, the insulating sheet vents 2221 may be disposed to face the battery cell vents 212 and/or the reinforcement frame connection vents 2211. That is, each of the plurality of insulating sheet vents 2221 may be disposed to face one of the battery cell vents 212 and/or one of the reinforcement frame connection vents 2211.

Referring to FIG. 11, a second example of the reinforcement frame 220 is depicted.

In FIG. 11, a plurality of insulating sheet vents 2221 may be connected to one reinforcement frame connection vent 2211. According to an embodiment, an area of the reinforcement frame connection vent 2211 illustrated in FIG. 11 may be greater than an area of the reinforcement frame connection vent 2211 illustrated in FIGS. 9 and 10. As one reinforcement frame connection vent 2211 communicates with the plurality of insulating sheet vents 2221, the reinforcement frame 220 may be lighter weight.

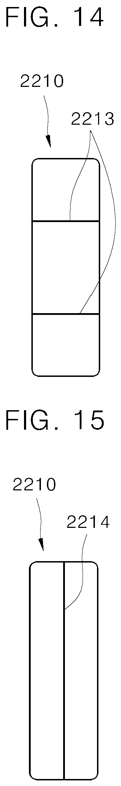

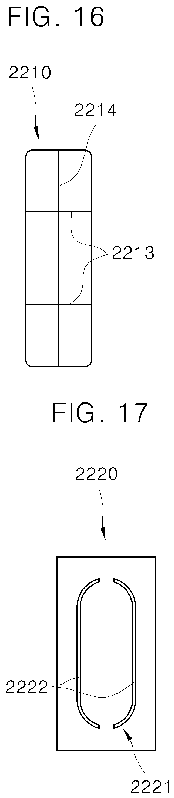

FIG. 12 is a cross-sectional view illustrating the first example of the reinforcement frame according to the present disclosure, and FIG. 13 is a cross-sectional view illustrating the second example of the reinforcement frame according to the present disclosure. FIG. 14 is a cross-sectional view illustrating a third example of the reinforcement frame according to the present disclosure, FIG. 15 is a cross-sectional view illustrating a fourth example of the reinforcement frame according to the present disclosure, and FIG. 16 is a cross-sectional view illustrating a fifth example of the reinforcement frame according to the present disclosure.

As shown in FIGS. 12 to 16, a cross section of the reinforcement frame body 2210 may vary.

Referring to FIG. 12, the cross section of the reinforcement frame body 2210 may be provided in a substantially quadrangular shape. **In** particular, according to an embodiment, the cross section of the reinforcement frame body 2210 may be provided as a substantially rectangular shape. As the cross section of the reinforcement frame body 2210 is provided as the substantially rectangular shape, a moment of inertia of the cross section of the reinforcement frame body 2210 can increase.

Referring to FIGS. 13 to 16, a reinforcement frame 220 may include a horizontal reinforcement frame partition wall 2213 and/or a vertical reinforcement frame partition wall 2214.

Referring to FIGS. 13 and 14, the reinforcement frame 220 may include the horizontal reinforcement frame partition wall 2213.

Referring to FIG. 13, the horizontal reinforcement frame partition wall 2213 may be disposed in a reinforcement frame body 2210. As such, the horizontal reinforcement frame partition wall 2213 may increase the strength of the reinforcement frame body 2210.

Referring to FIG. 14, the horizontal reinforcement frame partition wall 2213 disposed in the reinforcement frame body 2210 may be provided as a plurality of horizontal reinforcement frame partition walls 2213.

With the horizontal reinforcement frame partition walls 2213, a flame and/or gas G introduced into the reinforcement frame body 2210 through a battery cell vent 212 and a reinforcement frame connection vent 2211 may be divided by the horizontal reinforcement frame partition walls 2213 and discharged to a reinforcement frame discharge vent 2212 disposed in an upper surface (for example, in a +Z-axis direction) of the reinforcement frame 220 and a reinforcement frame discharge vent 2212 disposed in a lower surface (for example, in a -Z-axis direction) of the reinforcement frame 220. As the flame and/or gas G is divided and moved, a portion of the reinforcement frame body 2210 can be prevented from being intensely heated, and, thus, a fire can be prevented from occurring in other battery cells 210.

Referring to FIG. 15, a vertical reinforcement frame partition wall 2214 may be disposed in a reinforcement frame body 2210. The vertical reinforcement frame partition wall 2214 may increase the strength of the reinforcement frame 220.

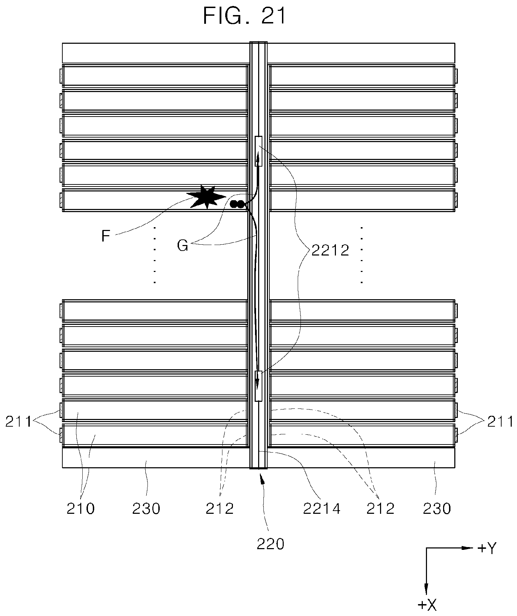

As the vertical reinforcement frame partition wall 2214 is disposed in the reinforcement frame body 2210, a reinforcement frame connection vent 2211 disposed in one side (for example, in a +Y-axis direction) of the reinforcement frame 220 and a reinforcement frame connection vent 2211 disposed in the other side (for example, in an -Y-axis direction) of the reinforcement frame 220 may be blocked from each other in the reinforcement frame body 2210. Accordingly, a flame and/or gas G introduced into the reinforcement frame body 2210 through the reinforcement frame connection vent 2211 disposed on one side (for example, in the +Y-axis direction) of the reinforcement frame 220 may be blocked from moving to the reinforcement frame connection vent 2211 disposed on the other side (for example, in the - Y-axis direction) of the reinforcement frame 220 by the vertical reinforcement frame partition wall 2214 (see FIG. 21).

As described above, as the flame and/or gas G, which is discharged from one battery cell 210 and introduced into the reinforcement frame body 2210, is prevented from moving to another battery cell 210 by the vertical reinforcement frame partition wall 2214, heat can be prevented from being transferred to another battery cell 210 such that a fire does not occur. Accordingly, thermal runaway of a battery module 20 can be prevented.

Referring to FIG. 16, the reinforcement frame 220 may include both the horizontal reinforcement frame partition wall 2213 and the vertical reinforcement frame partition wall 2214. The horizontal reinforcement frame partition wall 2213 and the vertical reinforcement frame partition wall 2214 may be disposed in the reinforcement frame body 2210. As the horizontal reinforcement frame partition wall 2213 and the vertical reinforcement frame partition wall 2214 are both disposed in the reinforcement frame body 2210, the strength of the reinforcement frame 220 can increase. In addition, as described with reference to FIGS. 13 to 15, thermal runaway of the battery module 20 can be prevented, and safety of the battery module 20 and a battery pack 1 can be improved.

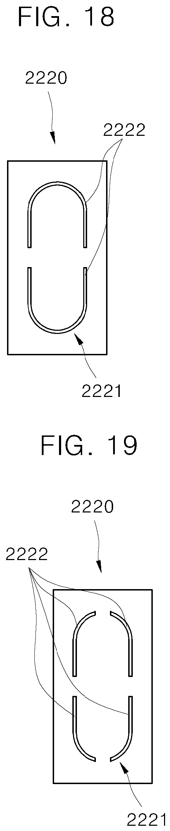

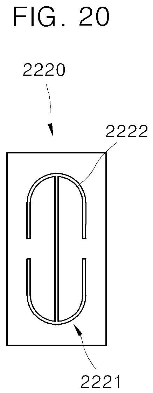

FIG. 17 is a plan view illustrating an example of the insulating sheet according to the present disclosure, and FIG. 18 is a plan view illustrating the second example of the insulating sheet according to the present disclosure. FIG. 19 is a plan view illustrating a third example of the insulating sheet according to the present disclosure, and FIG. 20 is a plan view illustrating a fourth example of the insulating sheet according to the present disclosure.

An insulating sheet 2220 illustrated in FIGS. 17 to 20 may be similar to the insulating sheet 2220 illustrated in FIG. 11. Accordingly, descriptions of the same components are omitted.

The insulating sheet 2220 may be disposed on a reinforcement frame 220. According to one embodiment, the insulating sheet 2220 may be disposed on a side surface (for example, in a Y-axis direction) of a reinforcement frame body 2210. An insulating sheet vent 2221 may be formed in the insulating sheet 2220. The insulating sheet vent 2221 may rupture due to high temperature or high pressure, and as the insulating sheet vent 2221 is ruptured, a hole may be formed in the insulating sheet 2220. Thus, one side and the other side of the insulating sheet 2220 may be in fluid communication with each other.

An insulating sheet notch 2222 may be formed in the insulating sheet 2220. In particular, the insulating sheet notch 2222 may be formed as a concave groove in a surface of the insulating sheet 2220. As the insulating sheet notch 2222 is formed in the insulating sheet 2220, a thickness of a portion of the insulating sheet 2220 in which the insulating sheet notch 2222 is formed may be less than a thickness of a portion of the insulating sheet 2220 in which the insulating sheet notch 2222 is not formed. Accordingly, the portion in which the insulating sheet notch 2222 is formed may be more vulnerable to heat or pressure than the portion in which the insulating sheet notch 2222 is not formed. When the insulating sheet notch 2222 is ruptured due to heat or pressure, a flame and/or gas G may pass through the insulating sheet vent 2221 and move into the reinforcement frame body 2210.

Hereinafter, various examples of the insulating sheet notch 2222 will be described with reference to FIGS. 17 to 20.

A shape of the insulating sheet notch 2222 may be a substantially elliptical shape. The insulating sheet notch 2222 may be connected continuously, and the insulating sheet notch 2222 may not be formed in a portion of the insulating sheet 2220.

According to one embodiment, the insulating sheet notch 2222 may not be formed in a central portion in a horizontal direction (see FIG. 17). According to another embodiment, the insulating sheet notch 2222 may not be formed in a central portion in a vertical direction (see FIG. 18). According to still another embodiment, the insulating sheet notch 2222 may not be formed in a central portion in a horizontal direction and a vertical direction (see FIG. 19). According to yet another embodiment, the insulating sheet notch 2222 may be formed in a vertical direction at a central portion in a horizontal direction (see FIG. 20).

As described above, as the insulating sheet notch 2222 is provided in various shapes, conditions under which the insulating sheet notch 2222 is ruptured may vary. As the insulating sheet notch 2222 is provided in various shapes, whether the insulating sheet notch 2222 is ruptured may vary depending on a temperature level or a pressure level.

FIG. 21 is a schematic plan view illustrating the battery module in which a fire occurs according to another embodiment of the present disclosure.

In FIG. 21, it is illustrated that a fire F occurs in the battery module 20 in which the vertical reinforcement frame partition wall 2214 is disposed in the reinforcement frame body 2210, as is illustrated in FIG. 15 or 16.

When a fire F occurs in a battery cell 210, a flame and/or gas G may move into the reinforcement frame 220 through a battery cell vent 212 and a reinforcement frame connection vent 2211. The flame and/or gas G moving into the reinforcement frame 220 may be blocked from moving to the battery cell vent 212 of another battery cell 210 facing the reinforcement frame 220 by the vertical reinforcement frame partition wall 2214. As the flame and/or gas G is blocked from moving to the battery cell vent 212 of the battery cell 210 facing the battery cell 210 in which the fire F occurs by the vertical reinforcement frame partition wall 2214, heat can be prevented from being transferred to the battery cell 210 in which the fire F does not occur. Accordingly, the occurrence of thermal runaway of the battery module 20 can be prevented, and the safety of the battery module 20 and the battery pack 1 can be improved.

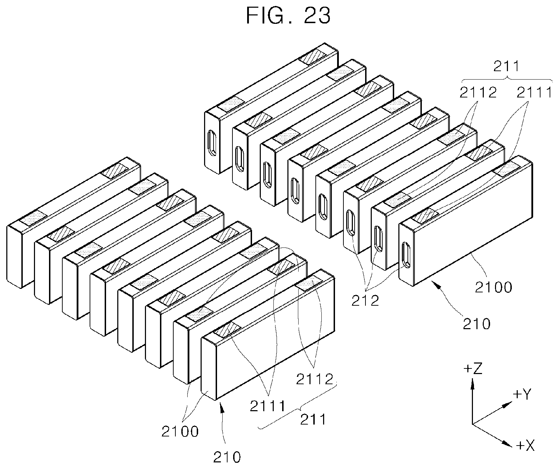

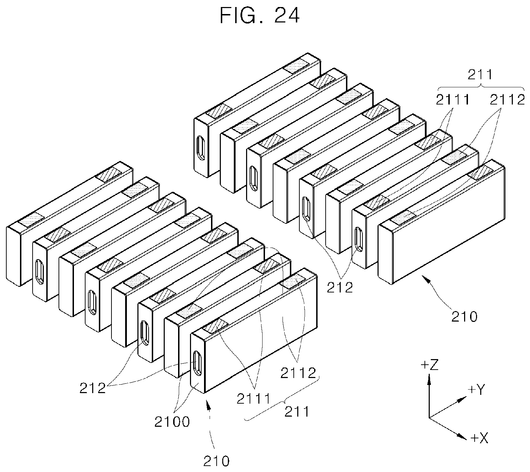

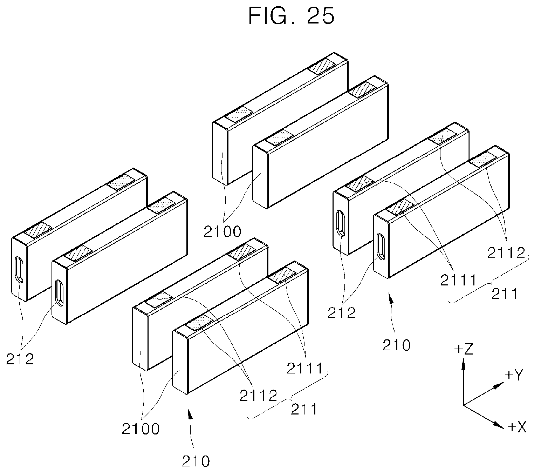

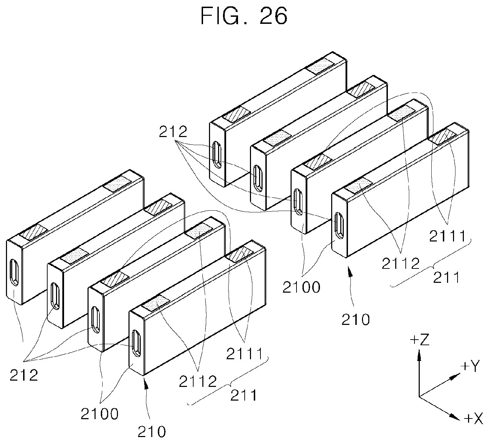

FIG. 22 is a perspective view illustrating the battery module according to another embodiment of the present disclosure, and FIG. 23 is a perspective view illustrating battery cells disposed according to a second embodiment of the present disclosure. FIG. 24 is a perspective view illustrating battery cells disposed according to a third embodiment of the present disclosure, and FIG. 25 is a perspective view illustrating battery cells disposed according to a fourth embodiment of the present disclosure. FIG. 26 is a perspective view illustrating battery cells disposed according to a fifth embodiment of the present disclosure.

FIGS. 22 to 26 illustrate battery cells 210 in which battery cell terminals 211 are located are different from locations of the battery cell terminals 211 illustrated in FIGS. 1 to21. In FIGS. 22 to 26, an example in which the battery cell terminals 211 are disposed on the battery cell 210 (for example, in a +Z-axis direction) is illustrated. In addition, reinforcement frames 220 may be disposed on both side portions (for example, in a Y-axis direction) of the battery cell 210.

Referring to FIG. 22, the battery cell terminals 211 may be disposed on the battery cell 210 (for example, in a +Z-axis direction). The battery cell terminals 211 may include positive terminals 2111 and negative terminals 2112. The battery cell terminals 211 may be electrically connected by busbar bodies 242. The battery cell positive terminals 2111 and/or the battery cell negative terminals 2112 may be electrically connected so that the battery cells 210 may be connected in series and/or parallel. As the battery cells 210 are connected in series and/or parallel, a capacity and/or voltage of a battery module 20 can increase.

The reinforcement frames 220 may be disposed on the side portions (for example, in a Y-axis direction) of the battery cells 210. According to an embodiment, the reinforcement frames 220 may be disposed on both side portions (for example, in a +Y-axis direction and a -Y-axis direction) of the battery cells 210. As the reinforcement frames 220 are disposed on both side portions (for example, in the Y-axis direction) of the battery cells 210, a moving direction of a flame and/or gas G discharged from the battery cells 210 may vary. Reinforcement frame discharge vents 2212 disposed in the reinforcement frames 220 may be disposed to face lower cooling plate vents 2512 and/or upper cooling plate vents 2522.

Battery cell vents 212 of the battery cells 210 may be disposed in one side (for example, in the +Y-axis direction), the other side (for example, in the -Y-axis direction), or one side (for example, in the +Y-axis direction) and the other side (for example, in the -Y-axis direction) of the battery cells 210.

Hereinafter, various examples of the form in which the battery cells 210 are disposed will be described with reference to FIGS. 23 to 26.

Referring to FIG. 23, battery cell vents 212 disposed in the battery cells 210 may be disposed toward a center of the battery module 20. According to an embodiment, the battery cell vents 212 may be disposed toward battery cells 210 that face each other, and the reinforcement frame 220 may be disposed between the battery cells 210 facing each other. The battery cell vents 212 of the battery cells 210 facing each other may be connected to reinforcement frame connection vents 2211 disposed in one reinforcement frame 220.

In FIGS. 24 to 26, the reinforcement frames 220 may be disposed on both sides (for example, in a Y-axis direction) of the battery cells 210. Accordingly, in FIGS. 24 to 26, three reinforcement frames 220 may be disposed, and the plurality of battery cells 210 may be disposed between two reinforcement frames 220.

Referring to FIG. 24, battery cell vents 212 disposed in the battery cells 210 may be disposed toward a center and/or the outside of the battery module 20. According to an embodiment, the battery cell vent 212 of one battery cell 210 may be disposed toward the center of the battery module 20, and the battery cell vent 212 of the other battery cell 210 adjacent to the one battery cell 210 may be disposed toward the outside of the battery module 20. Accordingly, the directions of the battery cell vents 212 disposed in the plurality of battery cells 210 that are provided in one direction (for example, in an X-axis direction) may alternate toward one side (for example, in a +Y-axis direction) and the other side (for example, in a -Y-axis direction). Accordingly, the number of battery cell vents 212 connected to one reinforcement frame 220 decreases, and the safety of the reinforcement frame 220 can thereby be improved.

Referring to FIG. 25, the form in which the battery cells 210 are disposed is similar to that of FIG. 24, but a direction in which battery cell vents 212 of two battery cells 210 which are one unit are disposed may be alternately changed. According to an embodiment, the battery cell vents 212 of two battery cells 210 may be disposed toward a center of the battery module 20, and battery cell vents 212 of two battery cells 210 facing the two battery cells 210 may be disposed toward the center of the battery module 20.

Two other battery cells 210 adjacent to the battery cells 210 including the battery cell vents 212 disposed toward the center may be disposed toward the outside of the battery module 20. As described above, two battery cells 210 are one unit, the battery cell vents 212 of one unit may be disposed toward the center of the battery module 20, and the battery cell vents 212 of another unit adjacent to the one unit may be disposed toward the outside of the battery module 20. Accordingly, the number of battery cell vents 212 connected to one reinforcement frame 220 decreases, and the safety of the reinforcement frame 220 can thereby be improved.

Referring to FIG. 26, battery cell vents 212 may be disposed on both side portions (for example, in a Y-axis direction) of the battery cells 210. The battery cell vents 212 may be disposed on both side portions (for example, in the Y-axis direction) of the battery cells 210, and each of two battery cell vents 212 disposed in one battery cell 210 may be connected to the reinforcement frame 220. As described above, as two battery cell vents 212 are disposed in one battery cell 210, and as each of two battery cell vents 212 is connected to the reinforcement frame 220, a flame and/or gas G occurring in the battery cell 210 due to a fire F may be quickly discharged to the reinforcement frame 220. Accordingly, thermal runaway of a battery module 20 and a battery pack 1 can be prevented.

Safety is improved with a battery module and a battery pack including the battery module according to the present disclosure. **In** addition, thermal runaway can be prevented by using a battery module and a battery pack including the battery module according to the present disclosure.

However, the effects obtainable through the present disclosure are not limited to the effects described herein, and other technical effects that are not mentioned will be clearly understood by those skilled in the art from the present disclosure.

While the present disclosure has been described with reference to embodiments shown in the drawings, these embodiments are merely illustrative. Various modifications and equivalent other embodiments can be derived by those skilled in the art on the basis of the embodiments.

## Claims

1. A battery module comprising:
a plurality of battery cells, each of the battery cells including battery cell terminals and a battery cell vent;
a reinforcement frame including a plurality of reinforcement frame connection vents in fluid communication with the battery cell vents and a reinforcement frame discharge vent in fluid communication with the reinforcement frame connection vents; and
a busbar module that electrically connects the battery cell terminals.

2. The battery module as claimed in claim 1, further comprising an end plate disposed to face a battery cell disposed at an end portion of the plurality of battery cells.

3. The battery module as claimed in claim 1 or claim 2, further comprising a lower cooling plate which is disposed under the battery cells and is configured to cool the battery cells.

4. The battery module as claimed in claim 3, wherein the lower cooling plate includes:
a lower cooling plate body; and
a lower cooling plate vent that passes through the lower cooling plate body and is in fluid communication with the reinforcement frame discharge vent.

5. The battery module as claimed in any one of claims 1 to 4, further comprising an upper cooling plate that is disposed on the battery cells and is configured to cool the battery cells.

6. The battery module as claimed in any one of claims 1 to 5, further comprising insulation members that are disposed between adjacent battery cells, the insulation members insulating the battery cells from each other.

7. The battery module of any one of claims 1 to 6, wherein the reinforcement frame is disposed between battery cells that face each other.

8. The battery module as claimed in any one of claims 1 to 7, further comprising an insulating sheet that is disposed between the battery cells and the reinforcement frame, the insulating sheet blocking the battery cell vents from the reinforcement frame connection vent, and the insulating sheet being configured to be ruptured at a set temperature and/or pressure to allow the battery cell vents to be in fluid communication with the reinforcement frame connection vents.

9. The battery module as claimed in claim 8, wherein the insulating sheet includes insulating sheet vents disposed at locations corresponding to the battery cell vents and the reinforcement frame connection vents.

10. The battery module as claimed in claim 9, wherein each of the reinforcement frame connection vents is configured to be in communication with a plurality of battery cell vents when the insulating sheet is ruptured.

11. The battery module of claim 9 or claim 10, further comprising insulating sheet notches formed as concave grooves in the insulating sheet to form the insulating sheet vents.

12. The battery module as claimed in any oneof claims 1 to 11, wherein the battery cell vents are disposed at first side portions of the battery cells and the battery cell terminals at disposed at second side portions of the battery cells.

13. The battery module as claimed in any one of claims 1 to 11, wherein the battery cell vents are disposed at side portions of the battery cells and the battery cell terminals are disposed on other parts of the battery cells.

14. The battery module as claimed in any one of claims 1 to 13, wherein the reinforcement frame includes:
a reinforcement frame body; and
a vertical reinforcement frame partition wall disposed inside the reinforcement frame body and connected to an upper portion and a lower portion of the reinforcement frame body.

15. A battery pack comprising:
a pack case in which a space is formed and which includes pack vents through which an inside and an outside of the pack case are in fluid communication with each other; and
a battery module disposed in the pack case,
wherein the battery module includes:
a plurality of battery cells, each of the battery cells including battery cell terminals and a battery cell vent;
a reinforcement frame including a plurality of reinforcement frame connection vents in fluid communication with the battery cell vents and a reinforcement frame discharge vent in fluid communication with the reinforcement frame connection vents; and
a busbar module that electrically connects the battery cell terminals.
